(19) Europäisches Patentamt / European Patent Office / Office européen des brevets

(11) **EP 4 618 374 A1**

(12) **DEMANDE DE BREVET EUROPEEN**

(43) Date de publication:
**17.09.2025  Bulletin 2025/38**

(21) Numéro de dépôt: **25160435.1**

(22) Date de dépôt: **26.02.2025**

(51) Classification Internationale des Brevets (IPC):
**H02J 50/12** (2016.01)

(52) Classification Coopérative des Brevets (CPC):
**H02J 50/12;** H02J 2207/20; H02J 2310/48

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **29.02.2024  FR 2402010**

(71) Demandeur: **Valeo eAutomotive Germany GmbH
91056 Erlangen (DE)**

(72) Inventeur: **ALLALI, Nicolas
95892 CERGY PONTOISE (FR)**

(74) Mandataire: **Valeo Powertrain Systems
Service Propriété Intellectuelle
Immeuble le Delta
14, avenue des Béguines
95892 Cergy Pontoise (FR)**

(54) **CIRCUIT D'ALIMENTATION ÉLECTRIQUE D'UNE UNITÉ DE STOCKAGE D'ÉNERGIE ÉLECTRIQUE DE VÉHICULE**

(57)    Sous-circuit secondaire (6) pour circuit d'alimentation électrique (1) d'une unité de stockage d'énergie électrique (2), le sous-circuit secondaire (6) étant apte à échanger sans contact par couplage inductif de l'énergie électrique avec un sous-circuit primaire (4) apte à être connecté à un réseau de tension (5), le sous-circuit secondaire (6) étant apte à être connecté à une unité de stockage d'énergie électrique (2), le sous circuit-secondaire (6) comprenant :
- une cellule inductive secondaire (20) apte à échanger sans contact par couplage inductif de l'énergie électrique avec le sous-circuit primaire (4),
- un convertisseur de tension (30) apte à réaliser une adaptation d'impédance de l'impédance sur l'entrée alternative de ce convertisseur de tension (23), indépendamment de l'impédance de l'unité de stockage d'énergie électrique (2), ce convertisseur de tension (30) convertissant la tension alternative aux bornes de la cellule inductive secondaire (20) en au moins une tension intermédiaire (Vint ; Vint1, Vint2), et ce convertisseur de tension (30) convertissant la tension intermédiaire en une tension continue de sortie (Vbatt) apte à être connectée aux bornes de l'unité de stockage d'énergie électrique(2), la valeur de cette tension continue de sortie (Vbatt) étant inférieure à celle de la tension intermédiaire (Vint ; Vint1, Vint2).

[Fig 1]

**Description**

La présente invention concerne un circuit d'alimentation électrique sans contact d'une unité de stockage d'énergie électrique de véhicule.

L'unité de stockage d'énergie électrique présente par exemple une tension nominale de 12V, 48V, 60V.

Il est connu d'alimenter électriquement par transmission sans contact par couplage inductif une unité de stockage d'énergie électrique de véhicule à une puissance comprise entre 3 et 50 kW, lorsque le véhicule est à l'arrêt ou lorsque celui-ci se déplace. Cette alimentation par transmission sans contact se fait alors au moyen de sous-circuits électriques distants couplés magnétiquement et accordés à la même fréquence de résonance. Les sous-circuits couplés magnétiquement mettent chacun en œuvre une cellule résonante de type LC. Cependant, pour transmettre un niveau de puissance satisfaisant, notamment plusieurs kW, il faut opérer à des fréquences élevées, notamment de l'ordre de 85 kHz ou plus, pour la fréquence de résonance de chaque sous-circuit résonant. En outre, ce type de solution nécessite d'opérer à faible distance entre les deux sous-circuits. Les niveaux de fréquence et de puissance mentionnés plus haut, pour une mise en œuvre en kW, peuvent en outre constituer un danger pour la santé des personnes exposées à proximité, ou un danger pour l'environnement en général.

La solution selon la demande WO2024/068486, qui ne fait pas partie de l'état de la technique publié, consiste à appliquer une tension alternative aux bornes d'une cellule inductive primaire couplée par couplage inductif à une cellule inductive secondaire qui, par adaptation d'impédance, permet de transmettre de l'énergie électrique à basse fréquence dans une unité de stockage d'énergie électrique, par exemple une batterie de véhicule électrique.

Il existe un besoin pour réaliser une alimentation électrique d'une unité de stockage d'énergie électrique par transmission sans contact qui améliore encore les solutions connues.

L'invention a pour objet de répondre à ce besoin et elle y parvient, selon l'un de ses aspects, à l'aide d'un sous-circuit secondaire pour circuit d'alimentation électrique d'une unité de stockage d'énergie électrique, le sous-circuit secondaire étant apte à échanger sans contact par couplage inductif de l'énergie électrique avec un sous-circuit primaire apte à être connecté à un réseau de tension, le sous-circuit secondaire étant apte à être connecté à une unité de stockage d'énergie électrique, le sous circuit-secondaire comprenant :

- une cellule inductive secondaire apte à échanger sans contact par couplage inductif de l'énergie électrique avec le sous-circuit primaire,
- un convertisseur de tension apte à réaliser une adaptation d'impédance de l'impédance sur l'entrée alternative de ce convertisseur de tension, indépendamment de l'impédance de l'unité de stockage d'énergie électrique, ce convertisseur de tension convertissant la tension alternative aux bornes de la cellule inductive secondaire en au moins une tension intermédiaire, et ce convertisseur de tension convertissant la tension intermédiaire en une tension continue de sortie apte à être connectée aux bornes de l'unité de stockage d'énergie électrique, la valeur de cette tension continue de sortie étant inférieure à celle de la tension intermédiaire.

Le sous-circuit secondaire ci-dessus permet de réaliser l'adaptation d'impédance lorsque l'amplitude de la tension aux bornes de la cellule inductive secondaire est supérieure à la tension de l'unité de stockage d'énergie électrique. On peut ainsi charger des unités de stockage d'énergie électrique de moyenne ou basse tension, sans qu'il ne soit nécessaire dans ce but d'accroître le nombre de spires, et donc le poids et le coût, du sous-circuit primaire. On étend ainsi de façon simple et peu coûteuse la capacité à réaliser l'adaptation d'impédance en vue de transmettre de l'énergie électrique à basse fréquence dans une unité de stockage d'énergie électrique, pour des unités de stockage d'énergie électrique dont la tension nominale peut être de 12V, 48V, 60V, voire jusqu'à des valeurs inférieures ou égales à 200V, voire même inférieures ou égales à 300V.

Selon un premier exemple de mise en œuvre, le convertisseur de tension peut comprendre un onduleur/-redresseur comprenant au moins deux bras de commutation en parallèle, chaque bras de commutation comprenant deux interrupteurs électroniques disposés de part et d'autre d'un point milieu, et chaque borne de la cellule inductive secondaire est connectée à un point milieu respectif, la tension aux bornes des bras définissant la tension intermédiaire, le convertisseur comprenant en outre un convertisseur abaisseur de tension convertissant la tension intermédiaire continue en la tension continue de sortie. Ce convertisseur abaisseur de tension comprend au moins un bras de commutation comprenant deux interrupteurs électroniques disposés de part et d'autre d'un point milieu. Le point milieu de ce bras est par exemple connecté via une inductance à une borne de sortie dont la différence de potentiel avec la masse constitue la tension continue de sortie.

Selon ce premier exemple, le convertisseur de tension comprend deux composants montés en cascade, à savoir l'onduleur/redresseur et le convertisseur abaisseur de tension.

L'un des deux bras de l'onduleur/redresseur est par exemple commandé pour commuter à la fréquence de l'énergie électrique échangée sans contact par couplage inductif et avec un rapport cyclique de 50%, et l'autre des deux bras de l'onduleur/redresseur est alors commandé pour commuter à une fréquence supérieure à celle de ladite énergie électrique et avec un rapport cyclique modulé selon le courant alternatif circulant dans la cellule inductive secondaire et la tension sur l'entrée alternative de cet onduleur/redresseur. Dans un exemple, ce rapport cyclique α s'exprime à l'aide de l'expression suivante :

$$\propto = (R_{Ref} \times |I|)/V_{int}$$

où :

- $V_{int}$ désigne la tension intermédiaire,
- I désigne le courant circulant dans la cellule inductive secondaire,
- $R_{Ref}$ est l'impédance équivalente sur l'entrée alternative de l'onduleur/redresseur, $R_{Ref}$ étant égale au ratio V/I où V est la tension entre les deux points milieux de l'onduleur/redresseur.

Lorsque les deux bras de commutation de l'onduleur/redresseur sont commandés comme ci-dessus, le convertisseur abaisseur de tension peut appliquer un rapport cyclique choisi pour imposer une valeur de la tension intermédiaire plus élevée que celle de la tension continue de sortie. Ce rapport cyclique est par exemple compris entre 2% et 98%.

En variante, les bras de commutation de l'onduleur/redresseur sont commandés à basse fréquence pour polariser la tension sur l'entrée alternative de l'onduleur/redresseur et le bras de commutation du convertisseur abaisseur de tension est commandé pour commuter à haute fréquence pour imposer la valeur de la tension intermédiaire. La tension intermédiaire peut selon cette variante avoir une forme de sinus redressé.

Le convertisseur abaisseur de tension est par exemple un hacheur série. D'autres exemples de convertisseurs abaisseurs de tension sont possibles.

Le rapport entre la valeur de la tension intermédiaire et la valeur de la tension continue de sortie du convertisseur peut être compris entre 1,5 et 200.

Selon le premier exemple de mise en œuvre, le convertisseur peut comprendre trois bras de commutation, à savoir : deux bras de commutation pour l'onduleur/redresseur, et un bras de commutation pour le convertisseur abaisseur de tension. Ces trois bras de commutation peuvent être montés en parallèle, ayant comme tension commune la tension intermédiaire.

Le convertisseur de tension selon ce premier exemple de mise en œuvre comprend par exemple uniquement trois bras de commutation. Dans ce cas, le convertisseur de tension comprend de préférence uniquement six interrupteurs électroniques commandables, par exemple des transistors à effet de champ Mosfet ou des transistors IGBT. Dans une variante dans laquelle le convertisseur comprend uniquement six interrupteurs électroniques, ces derniers ne sont pas tous commandables. Le bras de commutation du convertisseur abaisseur de tension comprend par exemple un interrupteur électronique commandable et un interrupteur électronique non commandable, tel qu'une diode.

Selon un deuxième exemple de mise en œuvre de l'invention, le convertisseur de tension comprend :

- une première borne d'entrée connectée à une borne de la cellule inductive secondaire,
- une deuxième borne d'entrée connectée à l'autre borne de la cellule inductive secondaire,
- un premier bras de commutation disposé entre la première borne d'entrée et la masse et comprenant deux interrupteurs électroniques disposés de part et d'autre d'un premier point milieu,
- un deuxième bras de commutation disposé entre la deuxième borne d'entrée et la masse et comprenant deux interrupteurs électroniques disposés de part et d'autre d'un deuxième point milieu, et
- une borne de sortie disposée entre le premier et le deuxième point milieu,

deux tensions intermédiaires étant définies, chaque tension intermédiaire étant définie entre une borne d'entrée du convertisseur et la masse, et la tension continue de sortie étant définie entre la borne de sortie et la masse.

Selon ce deuxième exemple de mise en œuvre, le convertisseur de tension peut ne comprendre que deux bras de commutation. Le convertisseur de tension n'est alors pas formé par la mise en cascade de deux composants, contrairement au convertisseur de tension selon le premier exemple de mise en œuvre. Il en résulte un gain en coût, en rendement, et en encombrement pour réaliser le convertisseur de tension.

Chaque tension intermédiaire est par exemple une tension dont la valeur variable reste supérieure ou égale à la valeur de la tension continue de sortie. Chaque bras de commutation du convertisseur de tension est par exemple commandé de manière à ce que chaque tension intermédiaire reste positive et prenne toujours une valeur supérieure ou égale à la tension continue de sortie. La commande des bras de commutation peut permettre de piloter les valeurs des tensions intermédiaires de manière à émuler une impédance $R_{Ref}$ sur l'entrée alternative du convertisseur de tension.

Selon le deuxième exemple de mise en œuvre :

- un premier condensateur peut être monté entre la première borne d'entrée du convertisseur et la masse, et
- un deuxième condensateur peut être monté entre la deuxième borne d'entrée du convertisseur et la masse.

Chacun de ces deux condensateurs peut permettre de maintenir la tension intermédiaire respective malgré la présence d'un courant efficace haute fréquence.

Selon ce deuxième exemple de mise en œuvre, chaque interrupteur électronique du convertisseur de tension peut être commandable, tel qu'un transistor à effet de champ de type Mosfet ou IGBT.

Selon le deuxième exemple de mise en œuvre, la borne de sortie peut être connectée au premier point milieu par l'intermédiaire d'une première inductance, et cette borne de sortie peut être connectée au deuxième point milieu par l'intermédiaire d'une deuxième inductance. Ces deux inductances peuvent être toutes deux réalisées à l'aide d'un même noyau magnétique sur lequel deux enroulements distincts sont bobinés. En variante, ces deux inductances disposent chacune d'un noyau propre. Le cas échéant, chaque inductance est formée par deux sous-inductances couplées entre elles.

Lorsque le convertisseur de tension ne comprend que des interrupteurs électroniques commandables, les deux interrupteurs électroniques commandables du premier bras peuvent être commandés à l'aide d'un premier rapport cyclique $\alpha_3$ et les deux interrupteurs électroniques commandables du deuxième bras de commutation être commandés à l'aide d'un deuxième rapport cyclique $\alpha_4$, et ces deux rapports cycliques étant déterminés comme suit

$$[Math.1] \alpha_3 = 0{,}5 - X$$

$$[Math.2] \alpha_4 = 0{,}5 + X$$

X étant un paramètre déterminé en fonction de la tension $V_{batt}$ aux bornes de l'unité de stockage d'énergie électrique, du courant I circulant dans la cellule inductive secondaire, et de l'impédance équivalente $R_{Ref}$ aux bornes de la cellule inductive secondaire, $R_{Ref}$ étant égale au ratio V/I où V est la tension aux bornes de la cellule inductive secondaire.

On peut ainsi émuler une valeur élevée pour $R_{Ref}$.

X est par exemple obtenu selon l'équation ci-dessous

$$[Math.3] \; X = \frac{\left( \sqrt{4 + \left( \frac{R_{Ref} \times I}{V_{batt}} \right)^2} - 2 \right) \times V_{batt}}{2 \times R_{Ref} \times I}$$

X peut présenter une valeur absolue inférieure ou égale à 0,5.

Dans tout ce qui précède, la cellule inductive secondaire peut être constituée par l'association en série d'un condensateur et d'une inductance.

En variante, la cellule inductive secondaire peut être constituée par une inductance, deux bras de commutation du convertisseur, qui sont les deux bras de commutation de l'onduleur/redresseur du convertisseur selon le premier exemple de mise en œuvre, étant commandés de manière à ce la tension aux bornes de l'entrée alternative de cet onduleur/redresseur émule la présence d'un condensateur monté en série avec la cellule inductive secondaire. Une telle commande permettant d'obtenir cette émulation est décrite dans la demande déposée en France le 2 juin 2023 par la Déposante sous le numéro 23 05573. Le contenu de cette demande est incorporé par référence à la présente demande en ce qui concerne la commande des rapports cycliques des bras de commutation de l'onduleur/redresseur.

L'échange sans contact par couplage inductif d'énergie électrique peut se faire à une fréquence inférieure à 5 kHz, par exemple inférieure à 3kHz, ou encore inférieure à 2kHz ou 1kHz, notamment encore sensiblement égale à 400 Hz ou 50 Hz. Dans ce cas, l'inductance de la cellule inductive secondaire peut être réalisée en fil métallique, comme du cuivre. Un tel fil métallique est plein, par opposition à du fil de Litz. Un fil métallique plein n'a pas sa section transversale évidée. En variante, cette inductance de la cellule inductive secondaire est en fil de Litz.

L'invention peut cependant aussi être appliquée si l'échange sans contact par couplage inductif d'énergie électrique se fait à une fréquence comprise entre 79 kHz et 90 kHz, par exemple de 85 kHz. Dans cette variante, du fil de Litz est avantageusement utilisé pour réaliser l'inductance de la cellule inductive secondaire.

Dans tout ce qui précède, le sous-circuit secondaire peut comprendre l'unité de stockage d'énergie électrique. Cette dernière peut être une batterie de type lithium-ion. Cette batterie a par exemple une tension nominale de 12V, 48V, 60V ou plus, par exemple de valeur jusqu'à 200V, voire jusqu'à 300V. L'unité de stockage d'énergie électrique sert à la propulsion électrique d'un véhicule. Ce véhicule est par exemple un véhicule qualifié de « véhicule de petite mobilité », par exemple un vélo électrique, un tricycle électrique, une trottinette électrique ou une moto électrique. Plus globalement, l'invention s'applique à toute forme de mobilité électrique, qu'il s'agisse d'un engin roulant sur terre via quatre, trois, deux roues ou tout autre nombre de roues, ou un engin se déplaçant dans les airs ou sur l'eau.

L'invention a encore pour objet, selon un autre de ses aspects, un circuit d'alimentation électrique d'une unité de stockage d'énergie électrique, ce circuit d'alimentation électrique comprenant :

- un sous-circuit primaire, apte à être connecté à un réseau de tension, et
- le sous-circuit secondaire, connecté à l'unité de stockage d'énergie électrique, le sous-circuit secondaire étant tel que défini ci-desssus,

le sous-circuit primaire et le sous-circuit secondaire étant configurés de manière à échanger sans contact par couplage inductif de l'énergie électrique.

Dans tout ce qui suit, le sous-circuit primaire peut comprendre :

- une cellule inductive primaire pour l'échange sans contact par couplage inductif d'énergie électrique avec la cellule inductive secondaire, et

- un onduleur/redresseur comprenant au moins deux bras de commutation, chaque bras de commutation comprenant deux interrupteurs électroniques commandables de part et d'autre d'un point milieu.

La cellule inductive secondaire et la cellule inductive primaire sont avantageusement choisies de manière à ce qu'elles présentent la même fréquence de résonance.

Dans tout ce qui précède, la cellule inductive primaire peut être constituée par l'association en série d'un condensateur et d'une inductance. En variante, la cellule inductive primaire peut être constituée par une inductance, les bras de commutation de l'onduleur/redresseur du sous-circuit primaire étant commandés de manière à ce la tension aux bornes de l'entrée alternative de cet onduleur/redresseur émule la présence d'un condensateur monté en série avec la cellule inductive primaire. Une telle commande permettant d'obtenir cette émulation est décrite dans la demande déposée en France le 2 juin 2023 par la Déposante sous le numéro 23 05573. Le contenu de cette demande est incorporé par référence à la présente demande en ce qui concerne la commande des rapports cycliques des bras de commutation de l'onduleur/redresseur.

Dans le cas d'un échange sans contact par couplage inductif d'énergie électrique à fréquence inférieure à 5 kHz, l'inductance de la cellule inductive primaire peut être réalisée en fil métallique, comme du cuivre. Un tel fil métallique est plein, par opposition à du fil de Litz. Un fil métallique plein n'a pas sa section transversale évidée. En variante, cette inductance de la cellule inductive primaire est en fil de Litz.

Le cas échéant, le sous-circuit primaire peut comprendre un autre onduleur/redresseur monté en amont de l'onduleur/redresseur aux points milieux duquel l'enroulement primaire du transformateur est monté, et cet autre onduleur/redresseur permet de redresser la tension alternative reçue du réseau lorsque la charge s'effectue depuis un réseau de tension alternative. Cet autre onduleur/redresseur peut alors réaliser une fonction de correction de facteur de puissance (« Power factor correction » en anglais). Une telle correction permet de façon connue que le courant prélevé sur le réseau soit le plus proche d'un sinus parfait à la pulsation du réseau. On réduit ainsi le courant réactif et les sous-harmoniques qui augmentent les pertes énergétiques en conduction.

Dans tout ce qui précède, le réseau électrique fournit par exemple une tension efficace nominale de 230V avec une fréquence de 50 Hz ou 60 Hz. Le réseau électrique est par exemple monophasé. Le réseau électrique est par exemple un réseau électrique régional ou national. En variante, il peut s'agir d'un réseau local indépendant, comprenant par exemple une ou plusieurs batteries alimentées par des sources d'énergie telles que éoliennes, des panneaux solaires, des piles à combustible ou des générateurs d'hydroélectricité.

En variante encore, le réseau électrique peut fournir une tension continue.

Le circuit électrique peut comprendre une unité de contrôle configurée pour commander les bras de commutation du sous-circuit primaire et/ou du sous-circuit secondaire. Au sens de la présente invention, lorsqu'un bras commute, chacun de ses deux interrupteurs électroniques commandables est ouvert et fermé de façon complémentaire avec la même fréquence de commutation.

Dans tout ce qui précède, l'unité de contrôle peut être configurée pour commander les différents bras de commutation de manière à réaliser sélectivement :

- une charge de l'unité de stockage d'énergie électrique depuis le réseau de tension, ou
- une charge du réseau de tension depuis l'unité de stockage d'énergie électrique.

Ainsi, en fonction du besoin, l'échange d'énergie électrique peut s'effectuer dans un sens ou dans l'autre.

Dans tout ce qui précède, chaque interrupteur électronique commandable est par exemple bidirectionnel.

Dans tout ce qui précède, l'unité de contrôle peut être un circuit de traitement numérique, par exemple un circuit intégré de type ASIC (« Application-specific integrated circuit » en anglais) ou un microcontrôleur. Cette unité de contrôle peut commander tous les bras de commutation du circuit électrique, qu'ils appartiennent au sous-circuit primaire ou au sous-circuit secondaire.

L'unité de contrôle peut en variante comprendre un module de commande du sous-circuit primaire et un module de commande du sous-circuit secondaire.

En variante, encore chaque sous-circuit présente une unité de contrôle qui lui est propre, cette dernière pouvant être un circuit de traitement numérique tel qu'un microcontrôleur.

L'invention a encore pour objet, selon un autre de ses aspects, un composant pour l'alimentation électrique d'une unité de stockage d'énergie électrique, comprenant le circuit électrique tel que défini ci-dessus, le composant définissant notamment une structure supportant de manière rigidement couplés entre eux le sous-circuit primaire et le sous-circuit secondaire. Un tel composant est couramment appelé « chargeur embarqué » (« on board charger » en anglais). Ce composant est apte à être embarqué dans un véhicule hybride ou électrique.

L'invention a encore pour objet, selon un autre de ses aspects, un dispositif pour l'alimentation électrique d'une unité de stockage d'énergie électrique, comprenant :

- une borne de charge pour véhicule hybride ou électrique, dans laquelle est disposé le sous-circuit primaire du circuit électrique tel que défini ci-dessus ou à laquelle ce sous-circuit primaire est électriquement connecté, et

- un composant apte à être embarqué dans un véhicule hybride ou électrique, dans lequel est disposé le sous-circuit secondaire du circuit électrique tel que défini ci-dessus.

Cette borne reçoit alors de l'énergie électrique d'un réseau électrique via un câble qui peut être un câble monophasé ou un câble triphasé. Dans ce cas, le circuit primaire et le circuit secondaire ne sont pas intégrés à un même composant physique.

L'invention pourra être mieux comprise à la lecture de la description qui va suivre d'un exemple non-limitatif de mise en œuvre de celle-ci et à l'examen du dessin annexé sur lequel :

[Fig.1] représente de façon schématique un circuit d'alimentation électrique selon un premier exemple de mise en œuvre de l'invention, et

[Fig.2] représente le sous-circuit secondaire selon un deuxième exemple de mise en œuvre de l'invention.

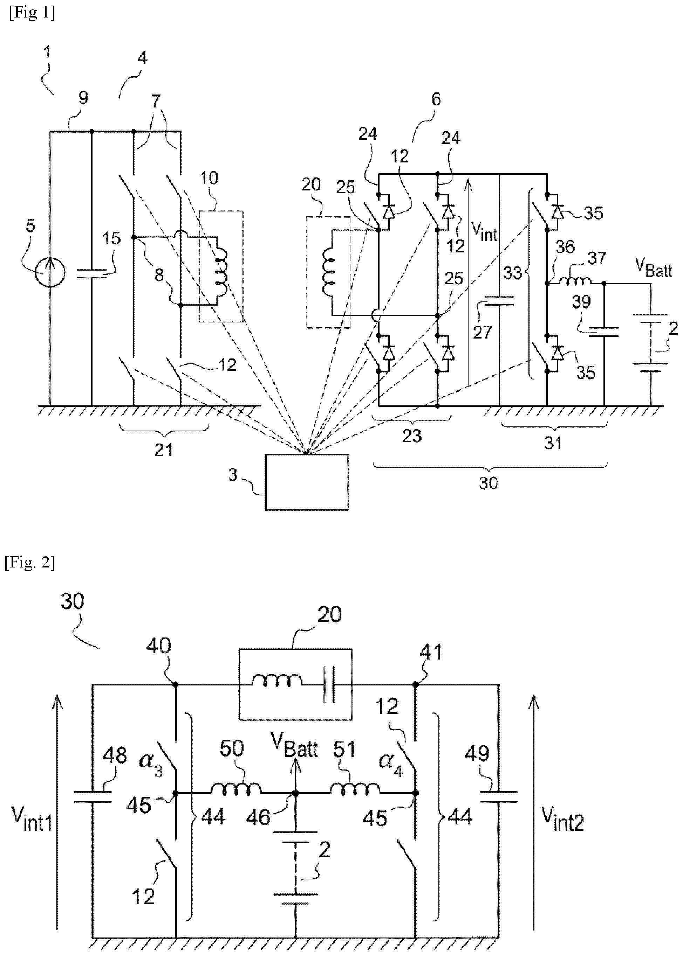

On a représenté sur la figure 1, un circuit 1 d'alimentation électrique d'une unité de stockage d'énergie électrique 2. Cette unité de stockage d'énergie électrique 2 est par exemple une batterie de véhicule, pouvant présenter une tension nominale de 48V, 60V, ou jusqu'à 200V. Cette batterie sert à alimenter un système de propulsion de véhicule électrique ou hybride. Le véhicule est par exemple un véhicule qualifié de « véhicule de petite mobilité », par exemple un vélo électrique, un tricycle électrique, une trottinette électrique ou une moto électrique.

Ce circuit d'alimentation électrique 1 comprend :

- une unité de contrôle 3,
- un sous-circuit primaire 4, apte à être connecté à un réseau de tension 5, et
- un sous-circuit secondaire 6, comprenant l'unité de stockage d'énergie électrique 2.

Le circuit d'alimentation électrique 1 met en œuvre un échange d'énergie électrique sans contact par couplage inductif entre le sous-circuit primaire 4 et le sous-circuit secondaire 6, pour la charge de l'unité de stockage d'énergie électrique 2.

L'unité de contrôle 3 est par exemple un microcontrôleur ou toute unité de traitement numérique.

Dans l'exemple considéré, le sous-circuit primaire 4 comprend :

- un connecteur 9 apte à être branché au réseau électrique,
- un onduleur/redresseur 21 comprenant ici deux bras de commutation 7, montés en parallèle et dont le fonctionnement sera décrit ci-après, et

- une cellule inductive primaire 10 dont le fonctionnement sera décrit ci-après.

Le réseau électrique 5 est ici représenté sous la forme d'un réseau de tension continue mais il peut en variante s'agir d'un réseau de tension alternative fournissant par exemple une tension efficace nominale de 230V avec une fréquence de 50 Hz ou 60 Hz. Un tel réseau électrique de tension alternative peut être monophasé ou triphasé. D'autres tensions sont possibles, par exemple une tension monophasée de valeur efficace de 120V et de fréquence de 60Hz, une tension biphasée de valeur efficace de 208V et de fréquence de 60Hz ou encore une tension triphasée de 240V et de fréquence de 60Hz, cette liste n'étant pas exhaustive. Dans le cas où le réseau fournit une tension alternative, un autre onduleur/redresseur non représenté est prévu entre le réseau et l'onduleur/redresseur 21, cet autre onduleur/redresseur assurant par exemple une fonction de correction du facteur de puissance.

Comme on peut le voir sur la Figure 1, un condensateur 15 peut être disposé en parallèle des deux bras de commutation 7. Ce dernier présente par exemple une capacité comprise entre $1\mu F$ et $1mF$, par exemple de $10\mu F$.

Chaque bras 7 du sous-circuit primaire 4 comprend ici deux interrupteurs électroniques commandables 12, tels que des transistors MOS, IGBT ou bipolaires, ou des thyristors, disposés de part et d'autre d'un point milieu 8. Les deux interrupteurs 12 d'un même bras de commutation 7 sont ici commandés à l'aide d'un même rapport cyclique, l'un en opposition de l'autre avec un temps mort par l'unité de contrôle 3.

Le premier bras 7 comprend ainsi deux interrupteurs électroniques commandables 12 et un premier point milieu 8 auquel une borne de la cellule inductive primaire 10 est connectée et ces deux interrupteurs électroniques commandables 12 sont commandés selon un rapport cyclique $\alpha_1$.

Le deuxième bras 7 comprend ainsi deux interrupteurs électroniques commandables 12 et un deuxième point milieu 8 auquel l'autre borne de la cellule inductive primaire 10 est connectée et ces deux interrupteurs électroniques commandables 12 sont commandés selon un rapport cyclique $\alpha_2$.

Dans l'exemple considéré, aucun composant physique n'est interposé entre les deux points milieux 8 de l'onduleur/redresseur 21 et la cellule inductive primaire 10.

La cellule inductive primaire 10 peut être formée par l'association en série : d'une inductance permettant la génération d'énergie magnétique, et d'un condensateur, pour former une cellule résonante. L'inductance a par exemple une valeur comprise entre $10\mu H$ et $10mH$ et le condensateur a une capacité comprise entre $10\,nF$ et $1\,mF$. L'inductance est par exemple réalisée par bobinage d'un fil de cuivre, autre que du fil de Litz.

Dans la variante représentée sur la Figure 1, la cellule inductive primaire 10 est formée par une inductance uniquement. Aucun condensateur physique n'est présent, la présence en série de ce condensateur avec l'inductance de la cellule inductive primaire 10 étant émulée par la commande des bras de commutation 7 par l'unité de contrôle primaire 3 à l'aide des rapports cycliques $\alpha_1$ et $\alpha_2$. Ici encore, l'inductance est par exemple réalisée par bobinage d'un fil de cuivre

On va maintenant décrire un premier exemple de mise en œuvre de sous-circuit secondaire 6 en référence à la figure 1. Ce sous-circuit secondaire 6 comprend une cellule inductive secondaire 20 pour l'échange d'énergie sans contact avec la cellule inductive primaire 10, et un convertisseur de tension 30 permettant de générer tension continue de sortie $V_{batt}$ apte à être connectée aux bornes de l'unité de stockage d'énergie électrique 2.

Selon ce premier exemple de mise en œuvre, le convertisseur de tension 30 comprend en cascade :

- un onduleur/redresseur 23, apte à réaliser une adaptation de l'impédance équivalente sur son entrée alternative (donc du côté de la cellule inductive secondaire 20), de manière à faire varier cette impédance indépendamment de l'impédance de l'unité de stockage d'énergie électrique 2, et
- un convertisseur abaisseur de tension 31.

L'onduleur/redresseur 23 permet, lorsqu'il fonctionne en mode redresseur, de redresser la tension induite aux bornes de la cellule inductive secondaire 20 en une tension continue $V_{int}$. L'onduleur/redresseur 23 comprend dans l'exemple décrit deux bras de commutation 24 disposés en parallèle, chaque bras comprenant deux interrupteurs électroniques commandables 12 disposés de part et d'autre d'un point milieu 25.

Les deux interrupteurs 12 d'un même bras de commutation 24 sont ici commandés à l'aide d'un même rapport cyclique, l'un en opposition de l'autre avec un temps mort par l'unité de contrôle 3.

Le premier bras 24 comprend ainsi deux interrupteurs électroniques commandables 12 et un premier point milieu 25 auquel une borne de la cellule inductive secondaire 20 est connectée et ces deux interrupteurs électroniques commandables 12 sont commandés selon un rapport cyclique $\alpha_3$.

Le deuxième bras 24 comprend ainsi deux interrupteurs électroniques commandables 12 et un deuxième point milieu 25 auquel l'autre borne de la cellule inductive secondaire 20 est connectée et ces deux interrupteurs électroniques commandables 12 sont commandés selon un rapport cyclique $\alpha_4$.

La cellule inductive secondaire 20 est par exemple formée par l'association en série : d'une inductance permettant de récupérer l'énergie magnétique issue de la cellule inductive primaire 10, et d'un condensateur, formant ainsi une cellule résonante. Dans l'exemple considéré, l'inductance a une valeur comprise entre 1mH et 100mH et le condensateur a une capacité comprise entre 100µF et 100mF. L'inductance est par exemple réalisée par bobinage d'un fil de cuivre, autre que du fil de Litz.

Dans la variante représentée sur la Figure 1, la cellule inductive secondaire 20 est formée par une inductance uniquement. Aucun condensateur physique n'est présent, la présence en série de ce condensateur avec l'inductance de la cellule inductive secondaire 20 étant émulée par la commande des bras de commutation 24 par l'unité de contrôle primaire 3 à l'aide des rapports cycliques $\alpha_3$ et $\alpha_4$. Ici encore, l'inductance est par exemple réalisée par bobinage d'un fil de cuivre.

Par ailleurs, l'unité de contrôle 3 agit dans l'exemple décrit sur la commande de l'onduleur/redresseur 23 de manière à faire varier l'impédance équivalente $R_{Ref}$ aux bornes de l'entrée alternative, définie entre les deux points milieux 25 des bras de commutation 24, indépendamment de l'impédance sur la sortie continue de cet onduleur/redresseur 23.

L'impédance équivalente $R_{Ref}$ est représentée par le ratio V/I où V est la tension entre les deux points milieux 25, et I l'intensité du courant circulant dans la cellule inductive secondaire 20.

$R_{Ref}$ a par exemple une valeur comprise entre 0,1 $\Omega$ et 20 $\Omega$, notamment entre 5 $\Omega$ et 15 $\Omega$. Pour une configuration de recharge donnée, cette configuration étant notamment déterminée par l'un au moins parmi : la position du sous-circuit secondaire 6 par rapport au sous-circuit primaire 4 et/ou le niveau de puissance à transmettre et/ou la tension aux bornes de l'unité de stockage d'énergie électrique 2, $R_{Ref}$ peut avoir une valeur fixe et cette valeur est par exemple dans la plage précitée. D'une configuration de charge à l'autre, par exemple en cas d'éloignement plus important entre le sous-circuit primaire 4 et le sous-circuit secondaire 6 et/ou pour tenir compte du vieillissement du système, la valeur de $R_{Ref}$ peut être modifiée, restant notamment dans la plage précitée.

L'onduleur/redresseur 23 de la figure 1 est par exemple commandé comme suit par l'unité de contrôle 3, pour réaliser l'adaptation d'impédance sur l'entrée alternative de l'onduleur/redresseur 23:

- l'un des deux bras de commutation 24 commute à la fréquence de l'énergie électrique échangée sans contact par couplage inductif et avec un rapport cyclique $\alpha_3$ de 50%, et
- l'autre des deux bras de commutation 24 commute à une fréquence supérieure à celle de l'énergie électrique échangée sans contact, par exemple à au moins 5 fois ou 10 fois cette fréquence de l'énergie électrique échangée sans contact, et avec un rapport cyclique $\alpha_4$ modulé selon le courant alternatif circulant dans la cellule inductive secondaire 20 et selon la tension aux bornes de l'entrée alternative de l'onduleur/redresseur 23. L'un des interrupteurs commandables 12 du bras de commutation 24 qui commute à une fréquence supérieure à celle de l'énergie électrique échangée sans contact est par exemple piloté selon le rapport cyclique $\alpha_4$ tandis que l'autre interrupteur commandable de ce bras 24 est piloté selon le rapport cyclique 1- $\alpha_4$, et $\alpha_4$ est par exemple déterminé selon l'équation ci-dessous :

$$\alpha_4 = (R_{ref} \times |I|)/V_{int}$$

où $V_{int}$ désigne la tension intermédiaire continue aux bornes des deux bras de commutation 24.

On constate sur la figure 1 qu'en parallèle des deux bras de commutation 24, un condensateur 27 est monté. Ce condensateur 27 est monté en parallèle d'un bras de commutation 33 du convertisseur abaisseur de tension 31. Le bras de commutation 33 comprend ici deux interrupteurs électroniques 35 disposés de part et d'autre d'un point milieu 36. Comme on peut le voir sur la figure 1, le point milieu 36 de ce bras 33 est ici connecté via une inductance 37 à une borne de sortie dont la différence de potentiel avec la masse constitue la tension continue de sortie $V_{batt}$. La tension continue de sortie $V_{batt}$ est ici appliquée à un condensateur 39 montée en parallèle de l'unité de stockage d'énergie électrique 2.

Le convertisseur abaisseur de tension 31 de la figure 1 est par exemple commandé comme suit par l'unité de contrôle 3, pour abaisser la tension $V_{int}$ en la tension continue de sortie $V_{batt}$ de sorte que $V_{batt}$ soit égal à $\alpha_5$ fois $V_{int}$ où $\alpha_3$ est compris entre 2/3 et 1/200 :

-　l'un des interrupteurs électroniques 35 du bras de commutation 33 est commandé selon le rapport cyclique $\alpha_5$
-　l'autre interrupteur électronique 33 est commandé selon le rapport cyclique 1-$\alpha_5$.

Le convertisseur de tension 30 de la figure 1 permet ainsi de réaliser une adaptation d'impédance lorsque la tension induite aux bornes de la cellule inductive secondaire 20 est supérieure à la tension continue de sortie $V_{batt}$.

Selon le premier exemple de mise en œuvre, les interrupteurs électroniques 35 du bras de commutation 33 ne sont pas nécessairement tous commandables. Dans un exemple non représenté mais couvert par l'invention, le convertisseur abaisseur 31 est un hacheur série, et l'un des interrupteurs électroniques 35 du bras de commutation 33 est alors une diode.

On va maintenant décrire en référence à la figure 2 un sous-circuit secondaire 6 selon un deuxième exemple de mise en œuvre de l'invention, ce sous-circuit secondaire 6 interagissant avec un sous-circuit primaire 4 qui est identique avec celui décrit en référence à la figure 1 et non représenté sur la figure 2 pour des raisons de clarté. Le sous-circuit secondaire 6 de la figure 2 est par exemple toujours commandé par l'unité de contrôle 3.

Selon ce deuxième exemple de mise en œuvre de l'invention, le convertisseur de tension 30 comprend :

-　une première borne d'entrée 40 connectée à une borne de la cellule inductive secondaire 20,
-　une deuxième borne d'entrée 41 connectée à l'autre borne de la cellule inductive secondaire 20,
-　un premier bras de commutation 44 disposé entre la première borne d'entrée 40 et la masse et comprenant deux interrupteurs électroniques 12 disposés de part et d'autre d'un premier point milieu 45,
-　un deuxième bras de commutation 44 disposé entre la deuxième borne d'entrée 41 et la masse et comprenant deux interrupteurs électroniques 12 disposés de part et d'autre d'un deuxième point milieu 45, et
-　une borne de sortie 46 disposée entre le premier et le deuxième point milieu 45.

La sortie alternative du convertisseur de tension 30 sur laquelle est présente une tension V est ici définie entre les deux bornes d'entrée 40 et 41.

On constate ainsi que le convertisseur de tension 30 selon ce deuxième exemple de mise en œuvre ne comprend que deux bras de commutation, à savoir les bras de commutation 44. Selon ce deuxième exemple de mise en œuvre, deux tensions intermédiaires $V_{int1}$ et $V_{int2}$ sont définies, $V_{int1}$ étant la tension aux bornes du premier bras de commutation 44 et $V_{int2}$ étant la tension aux bornes du deuxième bras de commutation 44.

Le convertisseur de tension 30 selon ce deuxième exemple de mise en œuvre comprend également deux condensateurs 48 et 49, chaque condensateur 48,49 étant monté en parallèle d'un bras de commutation 44 respectif.

La borne de sortie 46 définit avec la masse la tension de sortie continue $V_{batt}$ qui est appliquée à l'unité de stockage d'énergie électrique 2.

On constate également dans l'exemple considéré que la borne de sortie 46 est reliée à chaque point milieu 45 d'un bras de commutation 44 par l'intermédiaire d'une inductance 50, 51. L'inductance 50 est ainsi montée entre la borne de sortie 46 et le point milieu 45 du premier bras de commutation 44, et l'inductance 51 est montée entre la borne de sortie 46 et le point milieu 45 du deuxième bras de commutation 44. Les deux inductances 50 et 51 sont par exemple bobinées sur un noyau commun.

Selon ce deuxième exemple de mise en œuvre, chaque interrupteur électronique 12 d'un bras de commutation 44 est commandable. Il s'agit par exemple d'un transistor à effet de champ tel qu'un transistor Mosfet ou d'un transistor IGBT.

Dans l'exemple considéré, chaque tension in-

termédiaire $V_{int1}$ et $V_{int2}$ est une tension dont la valeur variable reste supérieure ou égale à la valeur de la tension continue de sortie $V_{batt}$. Dans ce but, chaque bras de commutation 44 du convertisseur de tension 30 est commandé de manière à ce que chaque tension intermédiaire $V_{int1}$, $V_{int2}$ reste positive et prenne toujours une valeur supérieure ou égale à la tension continue de sortie $V_{batt}$.

Cette commande des bras de commutation 44 consiste par exemple en l'emploi pour le premier bras de commutation 44 d'un premier rapport cyclique $\alpha_3$ et en l'emploi pour le deuxième bras de commutation d'un deuxième rapport cyclique $\alpha_4$, ces deux rapports cycliques étant déterminés comme suit

$$[\text{Math.4}]\, \alpha_3 = 0{,}5 - X$$

$$[\text{Math.5}]\, \alpha_4 = 0{,}5 + X$$

X étant un paramètre déterminé en fonction de la tension continue de sortie $V_{batt}$ aux bornes de l'unité de stockage d'énergie électrique 2, du courant I circulant dans la cellule inductive secondaire 20, et de l'impédance équivalente $R_{Ref}$ aux bornes de la cellule inductive secondaire 20, $R_{Ref}$ étant égale au ratio V/I où V est la tension sur l'entrée alternative du convertisseur 30.
X est par exemple obtenu selon l'équation ci-dessous

$$[\text{Math.6}]\, X = \frac{\left(\sqrt{4 + \left(\frac{R_{Ref} \times I}{V_{batt}}\right)^2} - 2\right) \times V_{batt}}{2 \times R_{Ref} \times I}$$

L'un des interrupteurs commandables 12 du premier bras de commutation 44 est par exemple piloté selon le rapport cyclique $\alpha_3$ tandis que l'autre interrupteur commandable de ce bras 44 est piloté selon le rapport cyclique 1- $\alpha_3$.

L'un des interrupteurs commandables 12 du deuxième bras de commutation 44 est par exemple piloté selon le rapport cyclique $\alpha_4$ tandis que l'autre interrupteur commandable de ce bras 44 est piloté selon le rapport cyclique 1- $\alpha_4$.

**Revendications**

1. Sous-circuit secondaire (6) pour circuit d'alimentation électrique (1) d'une unité de stockage d'énergie électrique (2), le sous-circuit secondaire (6) étant apte à échanger sans contact par couplage inductif de l'énergie électrique avec un sous-circuit primaire (4) apte à être connecté à un réseau de tension (5), le sous-circuit secondaire (6) étant apte à être connecté à une unité de stockage d'énergie électrique (2), le sous circuit-secondaire (6) comprenant :

- une cellule inductive secondaire (20) apte à échanger sans contact par couplage inductif de l'énergie électrique avec le sous-circuit primaire (4),
- un convertisseur de tension (30) apte à réaliser une adaptation d'impédance de l'impédance sur l'entrée alternative de ce convertisseur de tension (23), indépendamment de l'impédance de l'unité de stockage d'énergie électrique (2), ce convertisseur de tension (30) convertissant la tension alternative aux bornes de la cellule inductive secondaire (20) en au moins une tension intermédiaire ($V_{int}$ ; $V_{int1}$, $V_{int2}$), et ce convertisseur de tension (30) convertissant la tension intermédiaire en une tension continue de sortie ($V_{batt}$) apte à être connectée aux bornes de l'unité de stockage d'énergie électrique(2), la valeur de cette tension continue de sortie ($V_{batt}$) étant inférieure à celle de la tension intermédiaire ($V_{int}$ ; $V_{int1}$, $V_{int2}$), cette valeur de tension continue de sortie ($V_{batt}$) étant notamment inférieure à 200V, étant notamment égale à 12V, 48V, ou 60V.

2. Sous-circuit secondaire selon la revendication 1, le convertisseur de tension (30) comprenant un onduleur/redresseur (23) comprenant au moins deux bras de commutation (24) en parallèle, chaque bras de commutation comprenant deux interrupteurs électroniques (12) disposés de part et d'autre d'un point milieu (25), et chaque borne de la cellule inductive secondaire étant connectée à un point milieu respectif, la tension aux bornes des bras définissant la tension intermédiaire ($V_{int}$), le convertisseur de tension (30) comprenant en outre un convertisseur abaisseur de tension (31) convertissant la tension intermédiaire ($V_{int}$) en la tension continue de sortie ($V_{batt}$).

3. Sous-circuit secondaire selon la revendication 2, l'un de deux bras de l'onduleur/redresseur (23) étant commandé pour commuter à la fréquence de l'énergie électrique échangée sans contact par couplage inductif et avec un rapport cyclique de 50%, et l'autre des deux bras de l'onduleur/redresseur (23) étant commandé pour commuter à une fréquence supérieure à celle de ladite énergie électrique et avec un rapport cyclique modulé selon le courant alternatif circulant dans la cellule inductive secondaire (20) et la tension sur l'entrée alternative de cet onduleur/redresseur (23).

4. Sous-circuit secondaire selon la revendication 2 ou 3, le convertisseur abaisseur de tension (31) étant un hacheur série.

5. Sous-circuit secondaire selon l'une quelconque des revendications 2 à 4, le rapport entre la valeur de la

tension intermédiaire ($V_{int}$) et la valeur de la tension continue de sortie ($V_{batt}$) du convertisseur étant compris entre 1,5 et 200.

**6.** Sous-circuit secondaire selon l'une quelconque des revendications 2 à 5, le convertisseur de tension (30) comprenant exactement trois bras de commutation (24, 33).

**7.** Sous-circuit secondaire selon la revendication 1, le convertisseur de tension (30) comprenant :

- une première borne d'entrée (40) connectée à une borne de la cellule inductive secondaire (20),
- une deuxième borne d'entrée (41) connectée à l'autre borne de la cellule inductive secondaire (20),
- un premier bras de commutation (44) disposé entre la première borne d'entrée (40) et la masse et comprenant deux interrupteurs électroniques (12) disposés de part et d'autre d'un premier point milieu (45),
- un deuxième bras de commutation (44) disposé entre la deuxième borne d'entrée (41) et la masse et comprenant deux interrupteurs électroniques (12) disposés de part et d'autre d'un deuxième point milieu (45), et
- une borne de sortie (46) disposée entre le premier et le deuxième point milieu (45), deux tensions intermédiaires ($V_{int1}$, $V_{int2}$) étant définies, chaque tension intermédiaire ($V_{int1}$, $V_{int2}$) étant définie entre une borne d'entrée (40, 41) du convertisseur de tension et la masse, et la tension continue de sortie ($V_{batt}$) étant définie entre la borne de sortie (46) et la masse.

**8.** Sous-circuit secondaire selon la revendication 7, chaque tension intermédiaire ($V_{int1}$, $V_{int2}$) étant une tension dont la valeur variable reste supérieure ou égale à la valeur de la tension continue de sortie ($V_{batt}$).

**9.** Sous-circuit secondaire selon la revendication 7 ou 8, la borne de sortie (46) étant connectée au premier point milieu (45) par l'intermédiaire d'une première inductance (50) et cette borne de sortie (46) étant connectée au deuxième point milieu (45) par l'intermédiaire d'une deuxième inductance (51).

**10.** Sous-circuit secondaire selon l'une quelconque des revendications 7 à 9, les deux interrupteurs électroniques (12) du premier bras de commutation (44) étant commandables et commandés à l'aide d'un premier rapport cyclique $\alpha_3$ et les deux interrupteurs électroniques (12) du deuxième bras de commutation (44) étant commandables et commandés à l'aide d'un deuxième rapport cyclique $\alpha_4$, et ces deux rapports cycliques étant déterminés comme suit

$$[\text{Math.}7]\alpha_3 = 0,5 - X$$

$$[\text{Math.}8]\ \alpha_4 = 0,5 + X$$

X étant un paramètre déterminé en fonction de la tension continue de sortie ($V_{batt}$) aux bornes de l'unité de stockage d'énergie électrique, du courant I circulant dans la cellule inductive secondaire, et de l'impédance équivalente $R_{Ref}$ aux bornes de la cellule inductive secondaire, $R_{Ref}$ étant égale au ratio V/I où V est la tension sur l'entrée alternative du convertisseur de tension (30).

**11.** Sous-circuit secondaire selon l'une quelconque des revendications 7 à 10, le convertisseur de tension (30) comprenant uniquement deux bras de commutation (24).

**12.** Sous-circuit secondaire selon l'une quelconque des revendications précédentes, la cellule inductive secondaire (20) étant constituée par l'association en série d'un condensateur et d'une inductance.

**13.** Circuit d'alimentation électrique (1) d'une unité de stockage d'énergie électrique (2), ce circuit d'alimentation électrique comprenant :

- un sous-circuit primaire (4), apte à être connecté à un réseau de tension, et
- le sous-circuit secondaire selon l'une quelconque des revendications précédentes, connecté à l'unité de stockage d'énergie électrique (2),

le sous-circuit primaire (4) et le sous-circuit secondaire (6) étant configurés de manière à échanger sans contact par couplage inductif de l'énergie électrique

**14.** Dispositif pour l'alimentation électrique d'une unité de stockage d'énergie électrique (2), comprenant :

- le circuit électrique selon la revendication 13,
- une borne de charge pour véhicule hybride ou électrique, dans laquelle est disposé le sous-circuit primaire (4) du circuit électrique (1) ou à laquelle est connectée le sous-circuit primaire (4), et
- un composant apte à être embarqué dans un véhicule hybride ou électrique, dans lequel est disposé le sous-circuit secondaire (6) du circuit électrique (1).

[Fig 1]

[Fig. 2]

Europäisches
Patentamt

European
Patent Office

Office européen
des brevets

**RAPPORT DE RECHERCHE EUROPEENNE**

Numéro de la demande

EP 25 16 0435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MA CHUNWEI ET AL: "Single-Stage Active Rectifier With Wide Impedance Conversion Ratio Range for Inductive Power Transfer System Delivering Constant Power", IEEE TRANSACTIONS ON POWER ELECTRONICS, INSTITUTE OF ELECTRICAL AND ELECTRONICS ENGINEERS, USA, vol. 38, no. 6, 22 février 2023 (2023-02-22), pages 7877-7890, XP011938924, ISSN: 0885-8993, DOI: 10.1109/TPEL.2023.3248077 [extrait le 2023-02-23] | 1,2,4-9, 11-14 | INV. H02J50/12 |
| A | * alinéa [SectionIIandIII]; figures 2,5 * ----- | 3,10 | |
| X | VERMEER WILJAN ET AL: "Design of Misalignment Tolerant Control for an Inductive Charger with V2G Possibilities", 2019 IEEE PELS WORKSHOP ON EMERGING TECHNOLOGIES: WIRELESS POWER TRANSFER (WOW), IEEE, 18 juin 2019 (2019-06-18), pages 273-278, XP033738642, DOI: 10.1109/WOW45936.2019.9030618 * alinéa [sectionIII]; figure 3 * ----- | 1,2,4, 11-13 | DOMAINES TECHNIQUES RECHERCHES (IPC)<br><br>H02J<br>B60L |
| X | STOYKA KATERYNA ET AL: "Development of a Digitally Controlled Inductive Power Transfer System with Post-Regulation for Variable Load Demand", ELECTRONICS, vol. 11, no. 1, 25 décembre 2021 (2021-12-25), page 58, XP093119007, Basel, Switzerland ISSN: 2079-9292, DOI: 10.3390/electronics11010058 * pages 4-6; figures 3,4 * ----- | 1,2, 12-14 | |

-/--

Le présent rapport a été établi pour toutes les revendications

| Lieu de la recherche | Date d'achèvement de la recherche | Examinateur |
|---|---|---|
| Munich | 18 juillet 2025 | Grosse, Philippe |

Europäisches
Patentamt

European
Patent Office

Office européen
des brevets

**RAPPORT DE RECHERCHE EUROPEENNE**

Numéro de la demande

EP 25 16 0435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 11 451 091 B2 (AUCKLAND UNISERVICES LTD [NZ] ET AL.) 20 septembre 2022 (2022-09-20) * colonnes 14,15; figure 3 * ----- | 1,7-9, 11-14 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 18 juillet 2025 | Grosse, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 25 16 0435

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-07-2025

| Document brevet cité au rapport de recherche | Date de publication | Membre(s) de la famille de brevet(s) | Date de publication |
|---|---|---|---|
| US 11451091 B2 | 20-09-2022 | US 2020106303 A1 | 02-04-2020 |
| | | WO 2018182432 A1 | 04-10-2018 |

EPO FORM P0460

Pour tout renseignement concernant cette annexe : voir Journal Officiel de l'Office européen des brevets, No.12/82

**EP 4 618 374 A1**

## RÉFÉRENCES CITÉES DANS LA DESCRIPTION

**Documents brevets cités dans la description**

- WO 2024068486 A